# EUROPEAN PATENT SPECIFICATION

(11) **EP 4 164 032 B1**
(45) Date of publication and mention of the grant of the patent: **22.07.2026**
(21) Application number: 22755605.7
(22) Date of filing: 21.02.2022
(51) Int. Cl.: H01M 50/102, H01M 50/204, H01M 50/242, H01M 50/244, H01M 50/249

(54) **BATTERY PACK LOWER CASE AND BATTERY PACK**
BATTERIEPACK-UNTERGEHÄUSE UND BATTERIEPACK
BOÎTIER INFÉRIEUR DE BLOC-BATTERIE ET BLOC-BATTERIE

(30) Priority: 22.02.2021 CN 202120394672 U
(43) Date of publication of application: 12.04.2023
(73) Proprietor: SVOLT Energy Technology Co., Ltd., Changzhou, Jiangsu 213200 (CN)
(72) Inventor: WANG, Bowen, hangzhou, Jiangsu 213200 (CN)
(74) Representative: Michalski Hüttermann & Partner mbB
(86) International application number: PCT/CN2022/077119
(87) International publication number: WO 2022/174832

(56) References cited:
- EP-A1- 3 557 653
- WO-A1-2020/193426
- WO-A2-2019/060838
- CN-A- 108 878 703
- CN-A- 109 560 218
- CN-A- 110 040 179
- CN-U- 206 441 797
- CN-U- 207 320 203
- CN-U- 214 254 601
- DE-A1- 102008 059 680

## Description

### TECHNICAL FIELD

The present disclosure relates to the technical field of batteries, in particular to a battery pack lower case. The present disclosure also relates to a battery pack with the above battery pack lower case.

### BACKGROUND

A power battery system is a core component of an electric vehicle, which is directly related to the usability, endurance, safe and reliable operation, and the like of a motor of the electric vehicle. A battery pack is an important component of a power system, which is used for storing a battery module of an electric vehicle.

With the popularity of electric vehicles, people pay more attention to the safety of battery packs. In the prior art, the design of a battery pack case structure is more and more complex. Although the strength and rigidity of the battery pack case are improved to a certain extent, and the safety of a battery module is improved, the overall structural design of the battery pack case still has shortcomings. When a vehicle has a collision accident, there is also a risk that the battery pack case will severely press the battery module. A serious collision also easily causes the battery module to burn and explode.
EP3557653A1 discloses a battery pack in which a battery for driving an electric vehicle is housed in an interior of a case, a skeleton member extending in a vehicle width direction is provided on a bottom wall of the case, and the skeleton member has a hat-shaped section having an upper wall, a pair of side walls and a pair of flanges and opening downwardly, wherein the flange is fixed to the bottom wall of the case, and part of the battery is supported on the upper face of the flange.

### SUMMARY

In view of this, the present disclosure aims to provide a battery pack lower case, so as to effectively improve the overall strength and rigidity of the lower case, thus improving the safety of a battery pack.

In order to achieve the above objective, the technical solution of the present invention is achieved by providing a battery pack lower case according to claim 1.

Further, the lower-layer module mounting portion includes a middle mounting beam located in a middle portion, and side mounting beams separately arranged on two sides.

Further, L-shaped reinforcement plates are fixedly connected between adjacent ones of the mounting platforms.

Further, bottom ends of the end supporting beams extend to the bottom of the accommodation cavity; and bottoms of the end supporting beams are provided with supporting beam transition segments which tilt towards the bottom of the accommodation cavity for transitioning.

Further, a second cavity structure is encircled between each of the supporting beam transition segments and the liner.

Further, the outer reinforcement portion includes end anti-collision beams fixedly connected to the two ends of the liner respectively, side reinforcement beams fixedly connected to the two sides of the liner respectively, and a bottom protection plate fixedly connected to the bottom of the liner.

Further, bulges which protrude outwards are formed at bottom portions of the end anti-collision beams, so that a third cavity structure is formed between each of the end anti-collision beams and the liner.

Further, bottom ends of the end anti-collision beams (extend to the bottom of the liner; and bottom portions of the end anti-collision beams are provided with anti-collision beam transition segments which tilt towards the bottom of the liner for transitioning.

Further, a liner flange which is outwards turnup is formed at a top of the liner; reinforcement beam flanges are formed at tops of the side reinforcement beams and are configured to be connected to the liner flange in a superimposed manner.

Further, a fourth cavity structure is encircled between each of the reinforcement beam flanges and the liner flange.

Further, the battery pack lower case further includes mounting sleeves configured to be fixedly connected to the liner flange and the reinforcement beam flanges which are connected in the superimposed manner.

Compared with the prior art, the present disclosure has the following advantages:
(1) The battery pack lower case of the present disclosure can effectively improve the overall strength and rigidity of the lower case by arranging the outer reinforcement portion fixedly connected to the liner on the outer side of the liner. When a vehicle has a collision accident, the risk that the lower case presses the module due to a structural failure can be reduced, thereby improving the safety of the battery pack.
(2) The lower-layer module mounting portion is mainly composed of the middle mounting beam and the side mounting beams on both sides, and can cooperate with the outer reinforcement portion to further improve the overall strength and rigidity of the lower case.
(3) The upper-layer module mounting portion is mainly composed of side supporting beams on both sides and the end supporting beams at both ends. In addition to facilitating the installation of upper-layer modules, the upper-layer module mounting portion can also cooperate with the outer reinforcement portion to further improve the overall strength and rigidity of the lower case.
(4) The mounting platforms are arranged on the side supporting beams and the end supporting beams to facilitate the installation and removal of the upper-layer modules on the upper-layer module mounting portion. Meanwhile, the mounting platforms can also be configured to optimize the overall structure of the side supporting beams and the end supporting beams, and improve the overall strength and rigidity of the side supporting beams and the end supporting beams.
(5) The reinforcement plates are fixedly connected between adjacent ones of the mounting platforms, which can effectively improve the connection strength and rigidity between the various mounting platforms, and indirectly improve the overall strength and rigidity of the lower case, thus further reducing the risk that the lower case presses the modules due to an excessive internal deformation in a collision. Moreover, the reinforcement plates are L-shaped, with a reasonable structure, which is convenient for the overall arrangement of the inside of the lower case.
(6) The bottoms of the end supporting beams are provided with the supporting beam transition segments which tilt towards the bottom of the accommodation cavity for transitioning. When a vehicle has a collision accident, a collision force can be transferred to the bottom of the lower case, thus reducing the risk of a structural strength failure of the lower case caused by excessive dispersed local stress, that is, reducing the risk that the lower case presses the modules due to the excessive internal deformation.
(7) The outer reinforcement portion is mainly composed of the end anti-collision beams at both ends, the side reinforcement beams on both sides and the bottom protection plate, which can form an overall protection for the liner, thus effectively improving the overall strength and rigidity of the lower case.
(8) The bulges which protrude outwards are formed at the bottom portions of the end anti-collision beams, so that the cavity structure is formed between each of the end anti-collision beams and the liner, which can transfer and disperse the collision force, and improve the overall anti-collision effect of the lower case.
(9) The bottom portions of the end anti-collision beams are provided with the anti-collision beam transition segments which tilt towards the bottom of the liner for transitioning. When a vehicle has a collision accident, the collision force can be transferred to the bottom of the lower case; and the anti-collision beam transition segments cooperate with the supporting beam transition segments to further reduce the risk that the lower case presses the modules due to the excessive internal deformation.
(10) The liner flange is formed at the top of the liner, and the reinforcement beam flanges are formed at tops of the side reinforcement beams and are configured to be connected to the liner flange in the superimposed manner, which is conducive to the assembling of the liner and the side reinforcement beams. At the same time, the mounting sleeves are used to achieve the fixed connection between the liner flange and the reinforcement beam flanges, so that the structure is simple and easy to realize, the cost is low, and repair and replacement are convenient.

Another objective of the present disclosure is to provide a battery pack, which has the above battery pack lower case.

Compared with the prior art, the battery pack of the present disclosure has the same beneficial effect as the battery pack lower case, and will not be described here.

### BRIEF DESCRIPTION OF THE DRAWINGS

The drawings forming one part of the present disclosure are used to provide a further understanding of the present disclosure. The schematic embodiments of the present disclosure and the descriptions of the embodiments are used to explain the present disclosure, and do not constitute an improper limitation of the present disclosure. In the drawings:
Fig. 1 is an exploded diagram of a battery pack lower case according to an embodiment of the present disclosure;
Fig. 2 is a top view of a battery pack lower case according to an embodiment of the present disclosure;
Fig. 3 is a schematic sectional view of A-A in Fig. 2;
Fig. 4 is a partially enlarged diagram of the part C in Fig. 3;
Fig. 5 is a schematic sectional view of B-B in Fig. 2; and
Fig. 6 is a partially enlarged diagram of the part D in Fig. 5.

Numerals in the drawings:
1: liner; 100: liner flange; 2: middle mounting beam; 3: side mounting beam; 4: side supporting beam; 5: end supporting beam; 500: mounting platform; 501: supporting beam transition segment; 510: left end supporting beam; 520: right end supporting beam;
6: reinforcement plate; 7: end anti-collision beam; 700: bulge; 701: anti-collision beam transition segment; 710: left end anti-collision beam; 720: right end anti-collision beam;
8: side reinforcement beam; 800: reinforcement beam flange; 9: bottom protection plate; 10: mounting sleeve; 11: first cavity structure; 12: second cavity structure; 13: third cavity structure; and 14: fourth cavity structure.

### DETAILED DESCRIPTION

It should be noted that the embodiments in the present disclosure and features in the embodiments may be combined with each other without conflicts.

In the description of the present disclosure, it should be noted that orientations or positional relationships indicated by the terms "upper", "lower", "inside", "outside" and the like are orientations or positional relationships as shown in the drawings, and are only for the purpose of facilitating and simplifying the description of the present disclosure instead of indicating or implying that devices or elements indicated must have particular orientations, and be constructed and operated in the particular orientations, so that these terms are construed as limiting the present disclosure. In addition, the terms "first", "second" and the like are only for the purpose of description, and may not be understood as indicating or implying the relative importance.

In addition, in the descriptions of the present disclosure, unless otherwise clearly defined, the terms "mount", "connect", "connected" and "connector" should be broadly understood. For example, it may be fixed connection, detachable connection, integral connection, mechanical connection, electrical connection, direct connection, indirect connection via an intermediate, or inter-connection between two elements. Those of ordinary skill in the art can understand the specific meanings of the above terms in the present disclosure in combination with specific situations.

The present disclosure will be described in detail below with reference to the accompanying drawings and in combination with embodiments.

This embodiment relates to a battery pack lower case. As for an overall structure, the battery pack lower case includes a liner 1 provided with an accommodation cavity; a lower-layer module mounting portion is arranged at a bottom of the accommodation cavity; an upper-layer module mounting portion is arranged on a side portion of the accommodation cavity; the upper-layer module mounting portion and the lower-layer module mounting portion are arranged one above the other in a spaced manner and are fixedly connected to the liner 1 respectively; and an outer reinforcement portion fixedly connected to the liner 1 is arranged at an outer side of the liner 1, so as to effectively improve the overall strength and rigidity of the lower case and improve the safety of the battery pack.

It is worth mentioning here that all structures of the battery pack lower case are not described in this embodiment, and can all refer to the ordinary structural parts in the prior art, so descriptions thereof are omitted here.

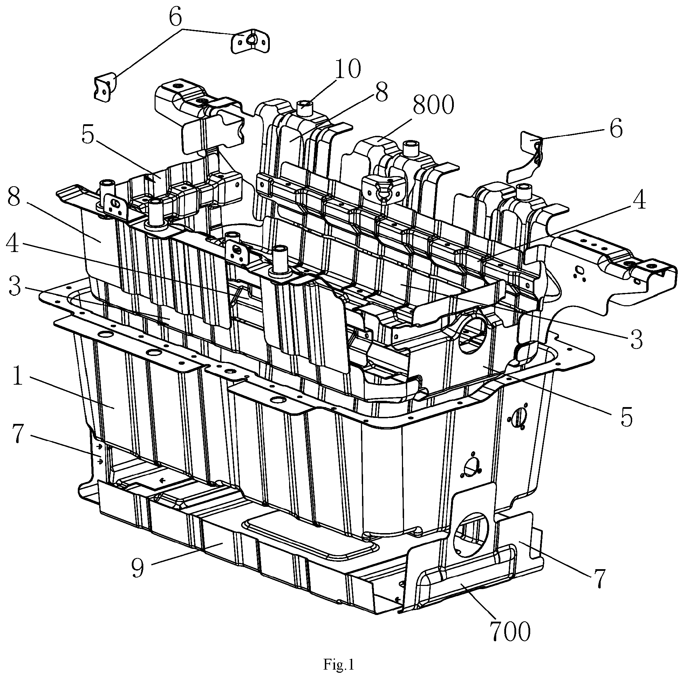

Based on the above design idea, an exemplary structure of the battery pack lower case of this embodiment is as shown in Fig. 1 to Fig. 6. As mentioned above, the battery pack lower case in this embodiment includes the liner 1 provided with the accommodation cavity. The lower-layer module mounting portion is arranged at the bottom of the accommodation cavity. The upper-layer module mounting portion is arranged on the side portion of the accommodation cavity. The upper-layer module mounting portion and the lower-layer module mounting portion are arranged one above the other in a spaced manner and are fixedly connected to the liner 1 respectively. The outer reinforcement portion fixedly connected to the liner 1 is arranged at the outer side of the liner 1.

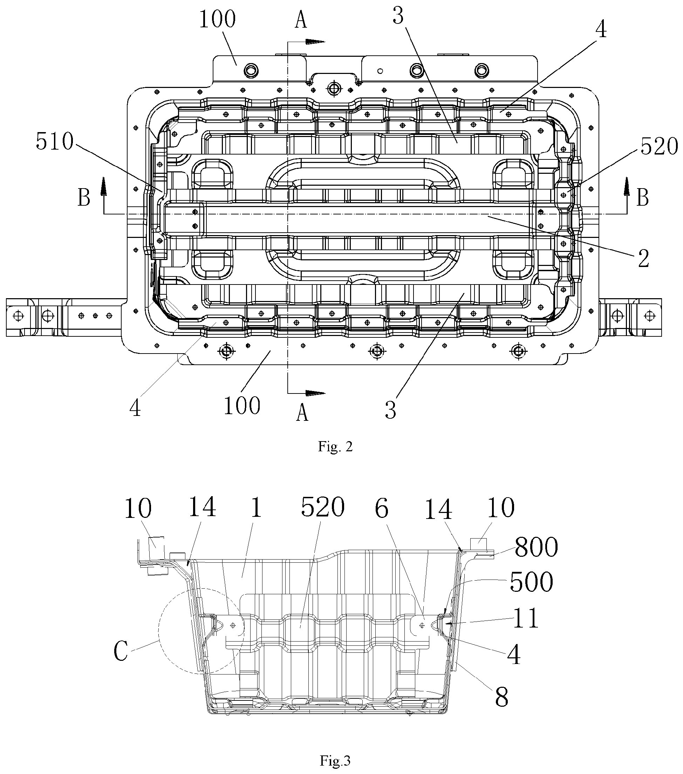

As a preferable implementation, as shown in Fig. 2, the above lower-layer module mounting portion includes a middle mounting beam 2 located in a middle portion, and side mounting beams 3 separately arranged on two sides, and can cooperate with the outer reinforcement portion to further improve the overall strength and rigidity of the lower case. In addition, in order to facilitate the fixing of upper-layer modules, the upper-layer module mounting portion in this embodiment includes side supporting beams 4 separately arranged on two sides of the accommodation cavity, and end supporting beams 5 separately arranged at two ends of the accommodation cavity. Furthermore, in order to facilitate the description, in the state shown in Fig. 3, the two end supporting beams 5 include a left end supporting beam 510 and the right end supporting beam 520. In addition to facilitating the fixing of lower-layer modules, the upper-layer module mounting portion can also cooperate with the outer reinforcement portion to further improve the overall strength and rigidity of the lower case.

Referring to Fig. 3 to Fig. 5, mounting platforms 500 protruding into the accommodation cavity are arranged on the various side supporting beams 4 and the various end supporting beams 5, so as to facilitate the installation and removal of the upper-layer modules on the upper-layer module mounting portion. Meanwhile, the mounting platforms 500 can also be configured to optimize the overall structure of the side supporting beams 4 and the end supporting beams 5, and improve the overall strength and rigidity of the side supporting beams 4 and the end supporting beams 5. It is worth mentioning that the mounting platforms 500 can be preferably configured to form a first cavity structure 11 together with the liner 1, so that the collision force can be transferred and dispersed, thus achieving the above optimization of the overall structure of the side supporting beams 4 and the end supporting beams 5 to further improve the overall strength and rigidity of the lower case.

Meanwhile, in a further setting, as shown in Fig. 2, in this embodiment, L-shaped reinforcement plates 6 are fixedly connected between adjacent ones of the mounting platforms 500, which can effectively improve the connection strength and rigidity between the various mounting platforms 500, and indirectly improve the overall strength and rigidity of the lower case, thus further reducing the risk that the lower case presses the modules due to an excessive internal deformation in a collision. Moreover, the reinforcement plates 6 are L-shaped, with a reasonable structure, which is convenient for the overall arrangement of the inside of the lower case. In a specific structure, the reinforcement plates 6 and the various mounting platforms 500 can be fixedly connected by bolts, so that the structure is simple and convenient to realize; the cost is low; and repair and replacement are convenient.

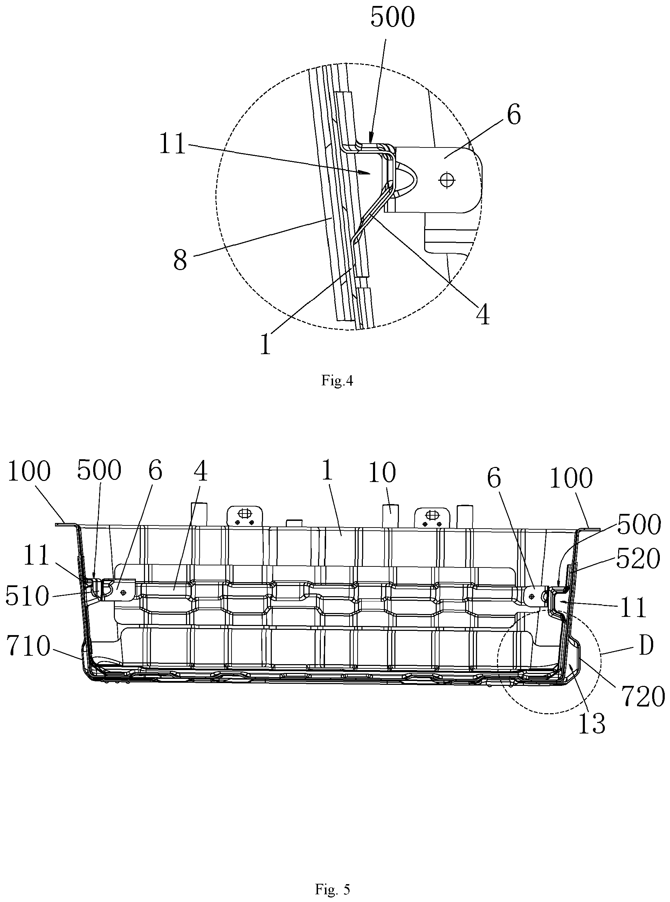

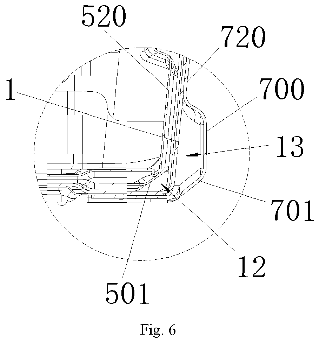

In addition, in order to improve the use effect of the two end supporting beams 5, as shown in Fig. 5 and Fig. 6, bottom ends of the two end supporting beams 5 extend to the bottom of the accommodation cavity; and bottoms of the two end supporting beams 5 are provided with supporting beam transition segments 501 which tilt towards the bottom of the accommodation cavity for transitioning. When a vehicle has a collision accident, a collision force can be transferred to the bottom of the lower case, thus reducing the risk of a structural strength failure of the lower case caused by excessive dispersed local stress, that is, reducing the risk that the lower case presses the modules due to the excessive internal deformation.

Of course, in the above content, Fig. 6 only shows the specific structure of the bottom of the right end supporting beam 520. The specific structure of the left end supporting beam 510 and the specific structure of the bottom of the right end supporting beam 520 have the same improvement design. In the states shown in Fig. 5 and Fig. 6, each of the supporting beam transition segments 501 at the left and right ends and the liner 1 enclose a second cavity structure 12 to facilitate the transferring and dispersion of the collision force and further improve the overall use effect of the lower case.

In this embodiment, as shown in Fig. 2, Fig. 5 and Fig. 6, the outer reinforcement portion includes end anti-collision beams 7 fixedly connected to the two ends of the liner 1 respectively, side reinforcement beams 8 fixedly connected to the two sides of the liner 1 respectively, and a bottom protection plate 9 fixedly connected to the bottom of the liner 1, so as to form overall protection for the liner 1, thus effectively improving the overall strength and rigidity of the lower case. Specifically, in the state shown in Fig. 5, the two end anti-collision beams 7 include a left anti-collision beam 710 and a right anti-collision beam 720 to facilitate the descriptions of related contents in this embodiment. Preferably, bulges 700 which protrude outwards are formed at bottom portions of the end anti-collision beams 7, so that a third cavity structure 13 is formed between each of the end anti-collision beams 7 and the liner 1, which can further transfer and disperse the collision force, and improve the overall anti-collision effect of the lower case.

Preferably, in this embodiment, as shown in Fig. 5 and Fig. 6, bottom ends of the end anti-collision beams 7 extend to the bottom of the liner 1; and bottom portions of the end anti-collision beams 7 are provided with anti-collision beam transition segments 701 which tilt towards the bottom of the liner 1 for transitioning. When a vehicle has a collision accident, the collision force can be transferred to the bottom of the lower case; and the anti-collision beam transition segments cooperate with the supporting beam transition segments 501 to further reduce the risk that the lower case presses the modules due to the excessive internal deformation. In order to facilitate the description, in the state shown in Fig. 5, the bottoms of the left end anti-collision beam 710 and the right end anti-collision beam 720 are respectively provided with the anti-collision beam transition segments 701 at the left and right ends. The anti-collision beam transition segment 701 at the left end corresponds to the bottom of the left end of the liner 1 and the supporting beam transition segment 501 at the left end, and the anti-collision beam transition segment 701 at the right end corresponds to the bottom of the right end of the liner 1 and the supporting beam transition segment 501 at the right end. It is convenient for the overall structural arrangement of the lower case, and the transition segments can cooperate with each other to improve the overall strength and rigidity of the bottom of the lower case.

In addition, in the states as shown in Fig. 1, Fig. 2, Fig. 3 and Fig. 5, a liner flange 100 which is outwards turnup is formed at a top of the liner 1, and reinforcement beam flanges 800 are formed at tops of the side reinforcement beams 8 and are configured to be connected to the liner flange 100 in a superimposed manner, so that it is conductive to the assembling of the liner 1 and the side reinforcement beams 8. Furthermore, the battery pack lower case further includes mounting sleeves 10 configured to be fixedly connected to the liner flange 100 and the reinforcement beam flanges 800 which are connected in the superimposed manner. The mounting sleeves 10 are used to fixedly connect the liner flange 100 to the reinforcement beam flanges 800, so that the structure is simple and easy to realize, the cost is low, and repair and replacement are convenient. The mounting sleeves 10 here can be conventional bolt sleeves or screw sleeves. In addition, in practical applications, a fourth cavity structure 14 is encircled between each of the reinforcement beam flanges 800 and the liner flange 100 to further improve the transferring and dispersion of the collision force between the reinforcement beam flanges 800 and the liner flange 100, thus improving the overall use effect of the lower case.

The battery pack lower case of this embodiment can effectively improve the overall strength and rigidity of the lower case by arranging the outer reinforcement portion fixedly connected to the liner 1 on the outer side of the liner 1. When a vehicle has a collision accident, the risk that the lower case presses the module due to a structural failure can be reduced, thereby improving the safety of the battery pack.

Finally, this embodiment also further relates to a battery pack which has the above-mentioned battery pack lower case.

The battery pack of this embodiment adopting the above battery pack lower case can effectively improve the overall strength and rigidity of the lower case. In case of a vehicle collision, the risk that the lower case presses the module due to a structural failure can be reduced, thereby improving the safety of the battery pack.

## Claims

1. A battery pack lower case, comprising a liner (1) provided with an accommodation cavity, wherein a lower-layer module mounting portion is arranged at a bottom of the accommodation cavity; an upper-layer module mounting portion is arranged on a side portion of the accommodation cavity; the upper-layer module mounting portion and the lower-layer module mounting portion are arranged one above the other in a spaced manner and are fixedly connected to the liner (1) respectively; and an outer reinforcement portion fixedly connected to the liner (1) is arranged at an outer side of the liner (1);
**characterized in that**
the upper-layer module mounting portion comprises side supporting beams (4) separately arranged on two sides of the accommodation cavity, and end supporting beams (5) separately arranged at two ends of the accommodation cavity;
mounting platforms (500) protruding into the accommodation cavity are arranged on the side supporting beams (4) and the end supporting beams (5);
a first cavity structure (11) is formed between each of the mounting platforms (500) and the liner (1).

2. The battery pack lower case according to claim 1, wherein the lower-layer module mounting portion comprises a middle mounting beam (2) located in a middle portion, and side mounting beams (3) separately arranged on two sides.

3. The battery pack lower case according to claim 1, wherein L-shaped reinforcement plates (6) are fixedly connected between adjacent ones of the mounting platforms (500).

4. The battery pack lower case according to claim 1, wherein bottom ends of the end supporting beams (5) extend to the bottom of the accommodation cavity; and bottoms of the end supporting beams (5) are provided with supporting beam transition segments (501) which tilt towards the bottom of the accommodation cavity for transitioning.

5. The battery pack lower case according to claim 4, wherein a second cavity structure (12) is encircled between each of the supporting beam transition segments (501) and the liner (1).

6. The battery pack lower case according to any one of claims 1 to 5, wherein the outer reinforcement portion comprises end anti-collision beams (7) fixedly connected to the two ends of the liner (1) respectively, side reinforcement beams (8) fixedly connected to the two sides of the liner (1) respectively, and a bottom protection plate (9) fixedly connected to the bottom of the liner (1).

7. The battery pack lower case according to claim6, wherein bulges (700) which protrude outwards are formed at bottom portions of the end anti-collision beams (7), so that a third cavity structure (13) is formed between each of the end anti-collision beams (7) and the liner (1).

8. The battery pack lower case according to claim 6, wherein bottom ends of the end anti-collision beams (7) extend to the bottom of the liner (1); and bottom portions of the end anti-collision beams (7) are provided with anti-collision beam transition segments (701) which tilt towards the bottom of the liner (1) for transitioning.

9. The battery pack lower case according to claim 6, wherein a liner flange (100) which is outwards turnup is formed at a top of the liner (1); reinforcement beam flanges (800) are formed at tops of the side reinforcement beams (8) and are configured to be connected to the liner flange (100) in a superimposed manner.

10. The battery pack lower case according to claim 9, wherein a fourth cavity structure (14) is encircled between each of the reinforcement beam flanges (800) and the liner flange (100).

11. The battery pack lower case according to claim 9, wherein the battery pack lower case further comprises mounting sleeves (10) configured to be fixedly connected to the liner flange (100) and the reinforcement beam flanges (800) which are connected in the superimposed manner.

12. A battery pack, comprising the battery pack lower case according to any one of claims 1 to 11.

## Patentansprüche

1. Batteriepack-Untergehäuse, umfassend eine Auskleidung (1), die mit einem Aufnahmehohlraum versehen ist, wobei ein Unterschicht-Modulmontageabschnitt an einem Boden des Aufnahmehohlraums angeordnet ist; ein Oberschicht-Modulmontageabschnitt auf einem Seitenabschnitt des Aufnahmehohlraums angeordnet ist; der Oberschicht-Modulmontageabschnitt und der Unterschicht-Modulmontageabschnitt beabstandet voneinander übereinander angeordnet sind und jeweils fest mit der Auskleidung (1) verbunden sind; und ein äußerer Verstärkungsabschnitt, der fest mit der Auskleidung (1) verbunden ist, an einer Außenseite der Auskleidung (1) angeordnet ist;
**dadurch gekennzeichnet, dass**
der Oberschicht-Modulmontageabschnitt Seitenstützträger (4), die separat auf zwei Seiten des Aufnahmehohlraums angeordnet sind, und Endstützträger (5), die separat an zwei Enden des Aufnahmehohlraums angeordnet sind, umfasst;
Montageplattformen (500), die in den Aufnahmehohlraum ragen, auf den Seitenstützträgern (4) und den Endstützträgern (5) angeordnet sind;
eine erste Hohlraumstruktur (11) zwischen jeder der Montageplattformen (500) und der Auskleidung (1) gebildet ist.

2. Batteriepack-Untergehäuse nach Anspruch 1, wobei der Unterschicht-Modulmontageabschnitt einen mittleren Montageträger (2), der sich in einem mittleren Abschnitt befindet, und Seitenmontageträger (3), die separat auf zwei Seiten angeordnet sind, umfasst.

3. Batteriepack-Untergehäuse nach Anspruch 1, wobei L-förmige Verstärkungsplatten (6) fest zwischen benachbarten der Montageplattformen (500) verbunden sind.

4. Batteriepack-Untergehäuse nach Anspruch 1, wobei sich untere Enden der Endstützträger (5) zu dem Boden des Aufnahmehohlraums erstrecken; und Böden der Endstützträger (5) mit Stützträger-Übergangssegmenten (501) versehen sind, die hin zu dem Boden des Aufnahmehohlraums für den Übergang geneigt sind.

5. Batteriepack-Untergehäuse nach Anspruch 4, wobei eine zweite Hohlraumstruktur (12) zwischen jedem der Stützträger-Übergangssegmente (501) und der Auskleidung (1) umschlossen ist.

6. Batteriepack-Untergehäuse nach einem der Ansprüche 1 bis 5, wobei der äußere Verstärkungsabschnitt End-Kollisionsschutzträger (7), die jeweils fest mit den zwei Enden der Auskleidung (1) verbunden sind, Seitenverstärkungsträger (8), die jeweils fest mit den zwei Seiten der Auskleidung (1) verbunden sind, und eine Bodenschutzplatte (9), die fest mit dem Boden der Auskleidung (1) verbunden ist, umfasst.

7. Batteriepack-Untergehäuse nach Anspruch 6, wobei Ausbuchtungen (700), die nach außen vorstehen, an unteren Abschnitten der End-Kollisionsschutzträger (7) gebildet sind, so dass eine dritte Hohlraumstruktur (13) zwischen jedem der End-Kollisionsschutzträger (7) und der Auskleidung (1) gebildet wird.

8. Batteriepack-Untergehäuse nach Anspruch 6, wobei sich untere Enden der End-Kollisionsschutzträger (7) zu dem Boden der Auskleidung (1) erstrecken; und untere Abschnitte der End-Kollisionsschutzträger (7) mit Kollisionsschutzträger-Übergangssegmenten (701) versehen sind, die hin zu dem Boden der Auskleidung (1) für den Übergang geneigt sind.

9. Batteriepack-Untergehäuse nach Anspruch 6, wobei ein Auskleidungsflansch (100), der nach außen umgeschlagen ist, an einer Oberseite der Auskleidung (1) gebildet ist; Verstärkungsträgerflansche (800) an Oberseiten der Seitenverstärkungsträger (8) gebildet sind und dazu konfiguriert sind, mit dem Auskleidungsflansch (100) in überlagerter Weise verbunden zu sein.

10. Batteriepack-Untergehäuse nach Anspruch 9, wobei eine vierte Hohlraumstruktur (14) zwischen jedem der Verstärkungsträgerflansche (800) und dem Auskleidungsflansch (100) umschlossen ist.

11. Batteriepack-Untergehäuse nach Anspruch 9, wobei das Batteriepack-Untergehäuse ferner Montagehülsen (10) umfasst, die dazu konfiguriert sind, fest mit dem Auskleidungsflansch (100) und den Verstärkungsträgerflanschen (800) verbunden zu sein, die in überlagerter Weise verbunden sind.

12. Batteriepack, umfassend das Batteriepack-Untergehäuse nach einem der Ansprüche 1 bis 11.

## Revendications

1. Boîtier inférieur de bloc-batterie, comprenant une garniture (1) dotée d'une cavité de logement, dans lequel une partie de montage de module de couche inférieure est agencée au fond de la cavité de logement ; une partie de montage de module de couche supérieure est agencée sur une partie latérale de la cavité de logement ; la partie de montage de module de couche supérieure et la partie de montage de module de couche inférieure sont agencées l'une au-dessus de l'autre de manière espacée et sont reliées de manière fixe à la garniture (1) respectivement ; et une partie de renfort externe reliée de manière fixe à la garniture (1) est agencée au niveau d'un côté externe de la garniture (1) ;
**caractérisé en ce que**
la partie de montage de module de couche supérieure comprend des poutres de support latérales (4) agencées séparément sur deux côtés de la cavité de logement, et des poutres de support d'extrémité (5) agencées séparément à deux extrémités de la cavité de logement ;
des plateformes de montage (500) faisant saillie dans la cavité de logement sont agencées sur les poutres de support latérales (4) et les poutres de support d'extrémité (5) ;
une première structure de cavité (11) est formée entre chacune des plateformes de montage (500) et la garniture (1).

2. Boîtier inférieur de bloc-batterie selon la revendication 1, dans lequel la partie de montage de module de couche inférieure comprend une poutre de montage centrale (2) située dans une partie centrale, et des poutres de montage latérales (3) agencées séparément sur deux côtés.

3. Boîtier inférieur de bloc-batterie selon la revendication 1, dans lequel des plaques de renfort en forme de L (6) sont reliées de manière fixe entre des plateformes adjacentes parmi les plateformes de montage (500).

4. Boîtier inférieur de bloc-batterie selon la revendication 1, dans lequel des extrémités inférieures des poutres de support d'extrémité (5) s'étendent jusqu'au fond de la cavité de logement ; et des fonds des poutres de support d'extrémité (5) sont dotés de segments de transition de poutre de support (501) qui s'inclinent vers le fond de la cavité de logement pour une transition.

5. Boîtier inférieur de bloc-batterie selon la revendication 4, dans lequel une deuxième structure de cavité (12) est entourée entre chacun des segments de transition de poutre de support (501) et la garniture (1).

6. Boîtier inférieur de bloc-batterie selon l'une quelconque des revendications 1 à 5, dans lequel la partie de renfort externe comprend des poutres anticollision d'extrémité (7) reliées de manière fixe aux deux extrémités de la garniture (1) respectivement, des poutres de renfort latérales (8) reliées de manière fixe aux deux côtés de la garniture (1) respectivement, et une plaque de protection inférieure (9) reliée de manière fixe au fond de la garniture (1).

7. Boîtier inférieur de bloc-batterie selon la revendication 6, dans lequel des renflements (700) qui font saillie vers l'extérieur sont formés au niveau de parties de fond des poutres anticollision d'extrémité (7), afin qu'une troisième structure de cavité (13) soit formée entre chacune des poutres anticollision d'extrémité (7) et la garniture (1).

8. Boîtier inférieur de bloc-batterie selon la revendication 6, dans lequel des extrémités de fond des poutres anticollision d'extrémité (7) s'étendent jusqu'au fond de la garniture (1) ; et des parties de fond des poutres anticollision d'extrémité (7) sont dotées de segments de transition de poutre anticollision (701) qui s'inclinent vers le fond de la garniture (1) pour une transition.

9. Boîtier inférieur de bloc-batterie selon la revendication 6, dans lequel une bride de garniture (100) qui est tournée vers l'extérieur est formée au niveau d'un sommet de la garniture (1) ; des brides de poutre de renfort (800) sont formées au niveau de sommets des poutres de renfort latérales (8) et sont conçues pour être reliées à la bride de garniture (100) de manière superposée.

10. Boîtier inférieur de bloc-batterie selon la revendication 9, dans lequel une quatrième structure de cavité (14) est entourée entre chacune des brides de poutre de renfort (800) et la bride de garniture (100).

11. Boîtier inférieur de bloc-batterie selon la revendication 9, dans lequel le boîtier inférieur de bloc-batterie comprend en outre des manchons de montage (10) conçus pour être reliés de manière fixe à la bride de garniture (100) et aux brides de poutre de renfort (800) qui sont reliées de manière superposée.

12. Bloc-batterie, comprenant le boîtier inférieur de bloc-batterie selon l'une quelconque des revendications 1 à 11.
